# EUROPEAN PATENT APPLICATION

(11) **EP 4 659 628 A1**
(43) Date of publication of application: **10.12.2025**
(21) Application number: 25181197.2
(22) Date of filing: 05.06.2025
(51) Int. Cl.: A47C 27/06

(54) **SPRING STRUCTURE WITH ADJUSTABLE HARDNESS AND SPRING PACKAGE**

(30) Priority: 07.06.2024 CN 202410740782
(71) Applicant: New-Tec Integration (Xiamen) Co., Ltd., Xiamen, Fujian 361100 (CN)
(72) Inventor: LENG, Luhao, Xiamen 361100 (CN)
(74) Representative: Verscht, Thomas Kurt Albert

(57) **Abstract**

The present disclosure discloses a spring structure with adjustable hardness, the spring structure comprises a spring, an adjustment member, and a wrapping member, the wrapping member is used for wrapping the spring, and the adjustment member is used for adjusting a pre-compression force of the spring; the adjustment member is disposed on one end of the spring to squeeze the one end of the spring; and the adjustment member comprises a rotating member, a moving member, and a support member, the moving member is movably mounted on the support member, and the rotating member is connected to the support member by a linkage; the rotating member rotates to drive the support member to rotate, and the moving member moves up and down along the support member to squeeze the spring by rotating the support member; and the spring structure solve problems of the existing spring structures, including inability to adjust a spring pre-compression force at will, inability to adjust a softness-hardness level when in use, and unitary function.

## Description

### RELATED APPLICATIONS

This application claims priority to Chinese patent application number 202410740782.6, filed on June 7, 2024. Chinese patent application number 202410740782.6 is incorporated herein by reference.

### FIELD OF THE DISCLOSURE

The present disclosure relates to the technical field of household spring structures, and in particular relates to a spring structure with an adjustable hardness and a spring package.

### BACKGROUND OF THE DISCLOSURE

Household spring structures are spring structures applied in household products and are mainly used to provide elastic support and vibration absorption. Common household spring structures include: (1) spring bed mattresses, which consist of spring bed mattress springs and are used in household beds to provide a comfortable sleeping experience and back support; and (2) household furniture, in which the spring structures are widely used parts in furniture, such as in seats, sofas, bed frames, to improve comfort and a service life of furniture.

The softness-hardness level of the household spring structures is based on use needs and personal preference of specific furniture, the softness-hardness level of the spring structures directly affects usage comfort of the household products, and generally, the spring structures in the bed mattresses, the sofas or other seats can provide good support and comfort when softer. If the spring structures are too hard, the resilience and the comfort of the seats or the bed mattresses are reduced, thus affecting the overall comfort of the furniture.

One type of the existing household spring structures that are individually packaged, in which each spring is individually enclosed in a bag or a sleeve, and multiple of the household spring structures that are individually packaged are then spliced to form furniture (bed mattresses, soft cushion, etc.). Currently, the softness-hardness level of the household spring structures can only be set before leaving the factory, when the furniture is then assembled after leaving the factory, merely suitable household springs can be searched for use in assembly according to needs, the softness-hardness level cannot be adjusted after forming the furniture, so the softness-hardness level of the household spring structures is fixed while in use, and a function selection is unitary, the user cannot adjust the softness-hardness level of the various parts according to their own preferences, and different requirements for the softness-hardness level of the household spring structures cannot be satisfied when in use.

### BRIEF SUMMARY OF THE DISCLOSURE

The main technical problem to be solved by the present disclosure is deficiencies of the existing spring structures, including inability to adjust a spring pre-compression force at will, inability to adjust a softness-hardness level when in use, and unitary function, a spring structure with an adjustable hardness is provided to solve the aforementioned deficiencies, and the spring pre-compression force can be adjusted at will.

In order to solve the aforementioned technical problems, the present disclosure provides a spring structure with adjustable hardness, the spring structure comprises a spring, an adjustment member, and a wrapping member, the wrapping member is used for wrapping the spring, and the adjustment member is used for adjusting a pre-compression force of the spring;

The adjustment member is disposed on one end of the spring to squeeze the one end of the spring; and the adjustment member comprises a rotating member, a moving member, and a support member, the moving member is movably mounted on the support member, and the rotating member is connected to the support member by a linkage; and

The rotating member rotates to drive the support member to rotate, and the moving member moves up and down along the support member to squeeze the spring by rotating the support member.

In a preferred embodiment, the support member comprises a threaded rod, and the threaded rod is connected to the rotating member; and the moving member is threaded to the threaded rod.

In a preferred embodiment, the support member comprises guide rods, and the moving member comprises an end surface for squeezing the spring; and
the guide rods are disposed on a side of the threaded rod, and the end surface of the moving member comprises guide holes, and the guide rods are disposed in the guide holes.

In a preferred embodiment, four of the guide rods are disposed on a circumference of the threaded rod at equal intervals.

In a preferred embodiment, the rotating member is disposed on a top of the wrapping member; and pins are disposed on the rotating member, the threaded rod comprises sockets, and the pins are inserted into the sockets.

In a preferred embodiment, the wrapping member comprises a fabric bag, an inner pressure cover, and an outer pressure cover; the spring is wrapped in the fabric bag, and the inner pressure cover and the outer pressure cover are assembled in sequence to fix the spring in the fabric bag; and

The threaded rod passes through the outer pressure cover and the inner pressure cover to be disposed in the fabric bag, and the guide rods are fixed to an inner side of the inner pressure cover; and the rotating member is disposed on an upper side of the outer pressure cover.

In a preferred embodiment, the moving member is a push cover, a side of the push cover for squeezing the spring comprises an annular groove, and the one end of the spring is buckled in the annular groove.

In a preferred embodiment, a length of the threaded rod is at least 1/3 of an overall length of the spring structure.

The present disclosure further discloses a spring package, it comprises the spring structure, and the spring package is a single-layer spring structure; and the single-layer spring structure is a structure in which the spring is built into the wrapping member.

The present disclosure further discloses a spring package, the spring package is a double-layer spring structure, and the double-layer spring structure comprises an upper spring structure and a lower spring structure; and one spring structure of the upper spring structure and the lower spring structure is the spring structure, the other spring structure serves as a rotating member of the one spring structure, and the upper spring structure and the lower spring structure are rotatable relative to each other.

Compared with the existing techniques, the technical solution has the following advantages.
1. The spring is compressed in a tension direction of the spring by building the adjustment member into the spring structure, a tension space of the spring is compressed, when the spring is compressed more forcefully, the pre-compression force of the spring is larger, and a softness-hardness level of the spring structure tends to be hard.
2. The rotating member and the moving member configured to move up and down in conjunction with a rotation of the rotating member are used as an adjustment member, the rotating member is driven by an external force to enable the moving member to move, so as to compress the spring abutting an end surface of the moving member, a compression amount varies with a movement of the moving member, and the pre-compression force of the spring is changed by the movement of the moving member, so that the pre-compression force of the spring can be adjusted at will.

### BRIEF DESCRIPTION OF THE DRAWINGS

FIG. 1 illustrates a spring structure with an adjustable hardness in a preferred embodiment of the present disclosure;
FIG. 2 illustrates a diagrammatic view of a rotational adjustment of the spring structure with the adjustable hardness in the preferred embodiment of the present disclosure;
FIG. 3 illustrates a diagrammatic view of a rotational adjustment of a spring structure with an adjustable hardness in Embodiment 1 of the present disclosure;
FIG. 4 illustrates a double-layer spring structure with an adjustable hardness in Embodiment 2 of the present disclosure;
FIG. 5 illustrates an internal sectional view of the double-layer spring structure with the adjustable hardness in Embodiment 2 of the present disclosure;
FIG. 6 illustrates a view of an initial use state of the double-layer spring structure in Embodiment 2 of the present disclosure;
FIG. 7 illustrates a diagrammatic view of a rotational adjustment of the double-layer spring structure in Embodiment 2 of the present disclosure;
FIG. 8 illustrates a view of an initial use state of a double-layer spring structure in Embodiment 3 of the present disclosure;
FIG. 9 illustrates a diagrammatic view of a rotational adjustment of the double-layer spring structure in Embodiment 3 of the present disclosure; and
FIG. 10 illustrates the double-layer spring structure with an adjustable hardness in Embodiment 3 of the present disclosure.

Reference numbers in the accompanying drawings: wrapping member 1 (i.e., fabric bag 1 or fabric sleeve 1); inner pressure cover 2; outer pressure cover 3; spring 4; moving member 5; threaded hole 51; guide hole 52; guide rod 6; threaded rod 7; rotating member 8; pin 81; spring package 9; rotating top cover 91; upper spring structure 92; upper fabric bag 921; upper spring 922; upper spring push cover 923; upper pressure cover 924 of the upper fabric bag; lower pressure cover 925 of the upper fabric bag; lower spring structure 93; lower fabric bag 931; lower spring 932; lower pressure cover 933 of the lower fabric bag; upper pressure cover 934 of the lower fabric bag; lower spring push cover 935; and adjustment member 94.

### DETAILED DESCRIPTION OF THE EMBODIMENTS

The technical solutions of the embodiments of the present disclosure will be clearly and completely described below in combination with the drawings of the embodiments of the present disclosure; it should be obvious that the described embodiments are merely some of the embodiments of the present disclosure instead of all embodiments, and all other embodiments fall into the protection scope of the present disclosure provided that they are obtained by a person of skill in the art based on the embodiments of the present disclosure without creative works.

In the description of the present disclosure, it should be noted that terms, such as "upper", "lower", "inner", "outer", "top/bottom", and the like, refer to orientations or positional relationships based on the orientations and the positional relationships shown in the drawings and are used for convenience in describing the present disclosure and simplifying the description, rather than indicating or implying that the device or the element should have a specified orientation or should be constructed or operated in a specified orientation, and should not be interpreted as a limitation of the present disclosure. Additionally, the terms "first" and "second" are merely used for descriptive purposes and should not be understood to indicate or imply relative importance.

In the description of the present disclosure, unless otherwise clearly stated or limited, terms, such as "installed", "disposed", "mounted/sleeved", and "connected", should develop broad understandings, for example, "connected" can refer to a wall-mounted connection, a detachable connection, an integrated connection, a mechanical connection, an electrical connection, a direct connection, an indirect connection through an intermediate medium, or an internal communication between two components, and the specified meaning of the terms in the present disclosure can be understood by those of skill in the art based on the specified conditions.

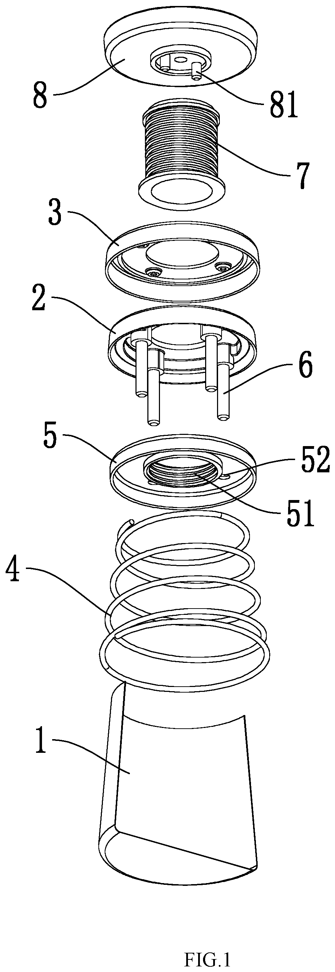

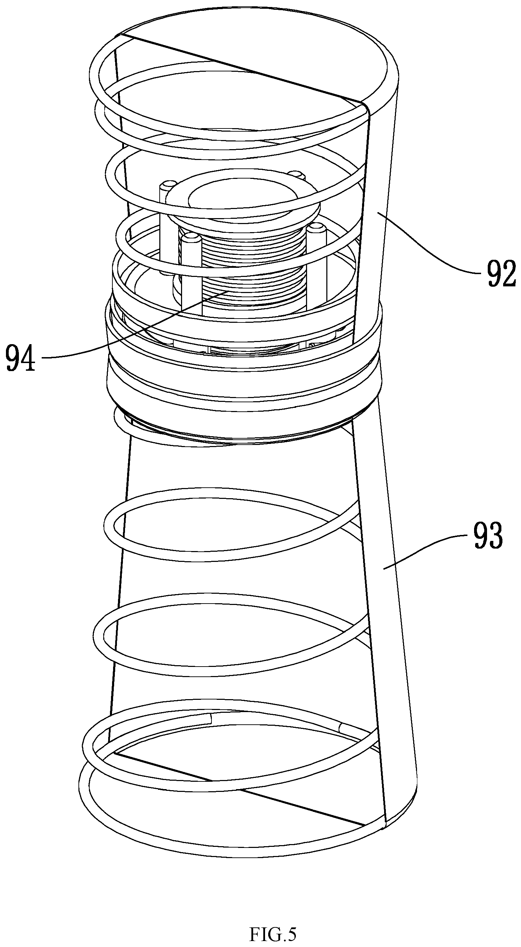

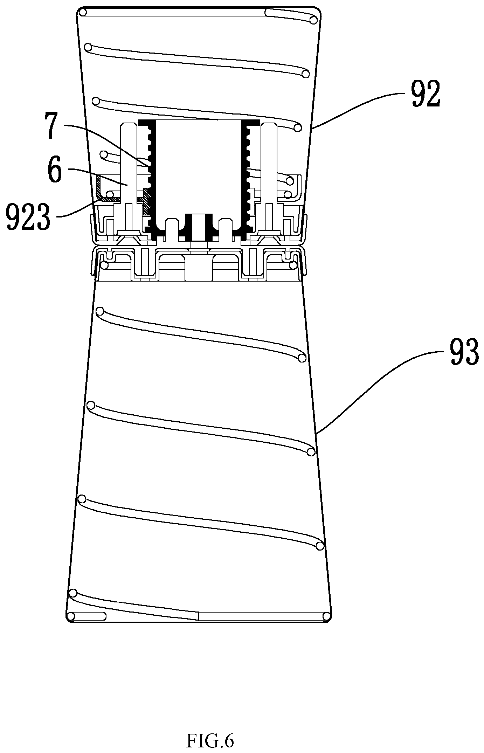

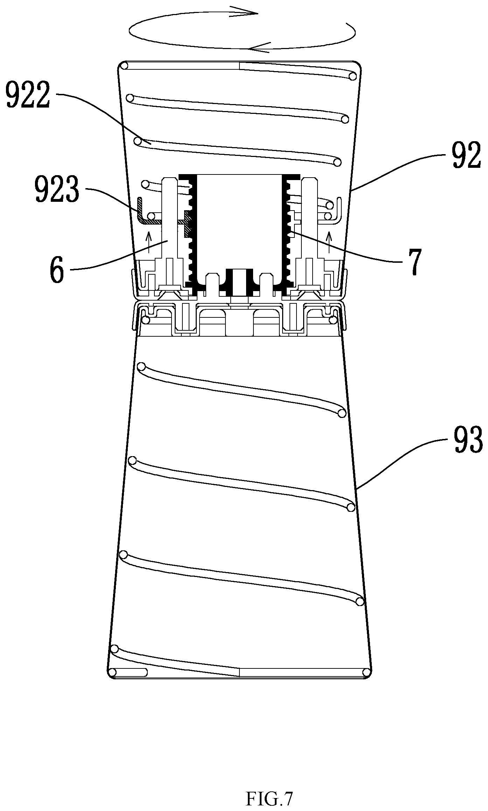

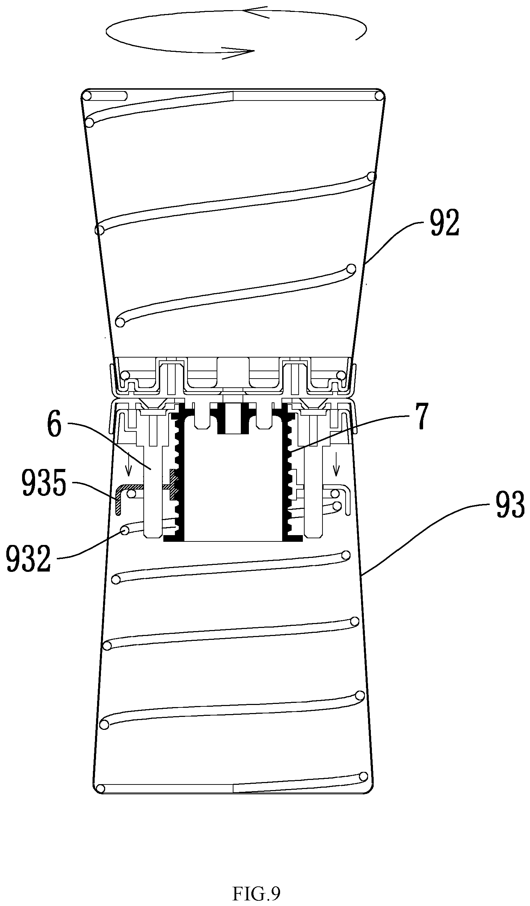

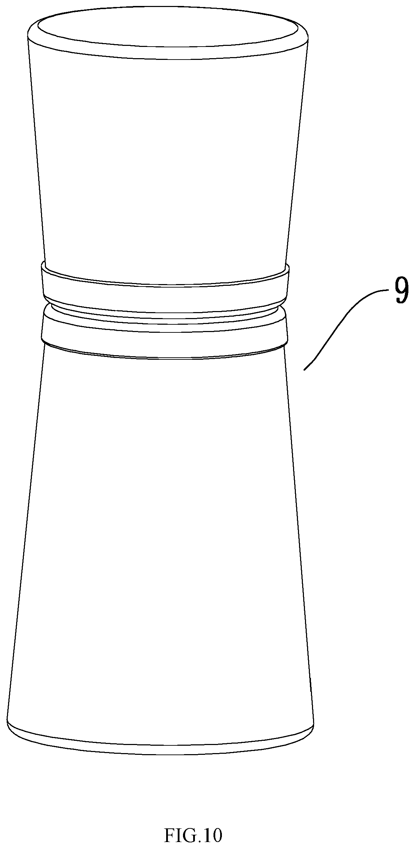

Referring to FIGS. 1-10, this embodiment provides a spring structure with an adjustable hardness, the spring structure is used to prepare a spring package, and the spring package is used to fill a seat pad in a bed mattress, a sofa, or other chairs to form a support structure, providing elastic support and comfort.

The adjustable hardness of the spring structure refers to adjusting a tension space of one or more springs 4, the one or more springs 4 are compressed to allow the one or more springs 4 to have a larger pre-compression force by adjusting a compressed height of the one or more springs 4, a magnitude of the pre-compression force is directly proportional to a softness-hardness level of a support that is provided, and a hardness is larger when the pre-compression force is larger.

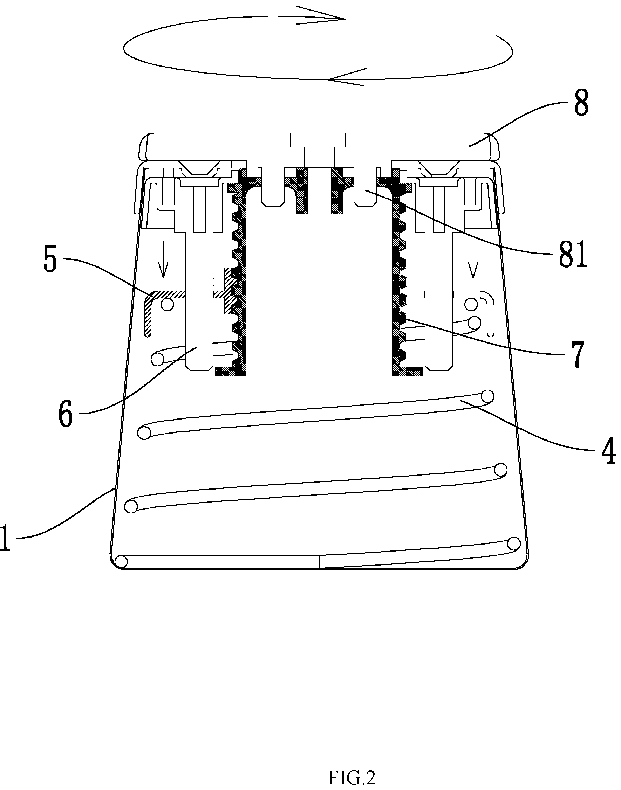

As shown in FIGS. 1 and 2, the spring structure comprises the one or more springs 4, an adjustment member, and one or more wrapping members 1 (e.g., each of one or more wrapping members 1 comprises a fabric bag 1 or a fabric sleeve 1), the one or more wrapping members 1 are used to wrap the one or more springs 4, and the adjustment member is used to compress the one or more springs 4 to adjust the pre-compression force of the one or more springs 4. The one or more wrapping members 1 can be one or more spring bags, one or more flexible sleeves, or one or more fabric bags or one or more sleeves of other flexible materials, individual ones of the one or more springs 4 are independently mounted into the one or more wrapping members 1, and the one or more springs that are bagged are arranged to be spliced with each other to form a spring bed mattress or a soft cushion.

The one or more springs 4 are mounted within the one or more wrapping members 1, the one or more springs 4 are used as supports, one or more of their structures are one or more structures with one or more large ends and one or more small ends, the one or more large ends are used as support ends and are disposed on one or more bottoms, the one or more small ends are used as stress ends and are disposed on one or more tops, and the one or more tops serve as a portion of the one or more springs 4 that are subjected to an external load, thereby providing the stable elastic support when the one or more springs 4 are subjected to the load.

The adjustment member is disposed on the one or more small ends of the one or more springs 4 to squeeze the one or more small ends of the one or more springs 4 so as to adjust the pre-compression force of the one or more springs 4, a stress acting on the one or more springs 4 can be stabilized to be more convenient in an adjustment operation when the one or more springs 4 are compressed. An adjustment member comprises a rotating member 8, a moving member 5 and a support member., the moving member 5 is movably mounted on the support member, the rotating member 8 is linked to the support member, the rotating member 8 rotates to drive the support member to rotate, the moving member 5 moves up and down along the support member under a rotary movement of the support member, and a spring 4 is squeezed so as to allow the spring 4 to be compressed in a movement process of the moving member 5.

The support member serves as a moving track for the moving member 5, the support member is disposed in a wrapping member 1 and passes through and is disposed in a helical middle cavity of the spring 4. A length of the support member is set to a compression amount by which the spring 4 can be compressed. When the moving member 5 is away from the rotating member 8 and at a bottom of the support member, the spring 4 is at a maximum compression amount, and the spring structure is in a usage state of a maximum hardness at this time; and when the moving member 5 is close to the rotating member 8 and at a top of the support member, the spring 4 is at a minimum compression amount, and the spring structure is in a usage state of a maximum softness. It should be noted that when the moving member 5 is at the top, the spring 4 is still squeezed, and the spring 4 is still in a state of having a preset pre-compression force, providing the elastic support of the spring structure.

A cooperation arrangement between the support member and the moving member 5 is as follows: the support member comprises a threaded rod 7, a length of the threaded rod 7 is at least 1/3 of an overall length of the spring structure, a threaded hole 51 is disposed on a center of the moving member 5, so that a spiral downward or upward movement amount of the moving member 5 is generated by a threaded cooperation between the threaded hole 51 and the threaded rod 7 under a rotation of the support member, so as to enable the moving member 5 to move.

At the same time, in order to ensure the moving member 5 generates the spiral downward or upward movement amount and moves stably, the support member further comprises guide rods 6, four of the guide rods 6 are disposed on a circumferential side of the threaded rod 7 at equal intervals, the moving member 5 comprises guide holes 52, and the guide rods 6 are disposed in the guide holes 52. The guide rods 6 are fixedly disposed relative to the threaded rod, when the moving member 5 spirally cooperates with the support member, the moving member 5 is limited from rotating in a spiral circumferential direction by a cooperation of the guide rods 6 on four sides and the guide holes 52, and moves upward and downward in a spiral axial direction under an action of the guide rods 6.

The rotating member 8 is disposed on a top of the wrapping member 1 and is disposed on an outer side of the wrapping member 1 used for external rotation operation. The rotating member 8 is disposed with pins 81, the threaded rod 7 comprises sockets, and the pins 81 are inserted into the sockets to achieve a rotation linkage of the rotating member 8 and the threaded rod 7.

In order to allow the adjustment member to be stably disposed on the one or more wrapping members 1, the wrapping member 1 comprises a fabric bag 1 (i.e., a fabric sleeve 1), an inner pressure cover 2, and an outer pressure cover 3, the fabric bag 1 is used for packaging the spring 4, the inner pressure cover 2 and the outer pressure cover 3 are mounted on an end of the fabric bag 1, and the end of the fabric bag 1 is used as a stressed end. The inner pressure cover 2 and the outer pressure cover 3 are closed to fix the fabric bag 1 in one aspect and facilitate an arrangement the adjustment member in another aspect.

Centers of the inner pressure cover 2 and the outer pressure cover 3 comprise through holes, the threaded rod 7 passes through the outer pressure cover 3 and the inner pressure cover 2 to be disposed in the fabric bag 1, the threaded rod 7 is fixedly mounted on the outer pressure cover 3 and is configured to rotate relative to the outer pressure cover 3. The inner pressure cover 2 and the outer pressure cover 3 are buckled together, and the guide rods 6 are fixed to the inner pressure cover 2 and are fixed relative to the threaded rod 7. The rotating member 8 is disposed on an upper end of the outer pressure cover 3 to drive the threaded rod 7 by rotating.

In order to enable the one or more springs 4 to be stably squeezed, the moving member 5 is a push cover, the push cover comprises a threaded hole 51 configured to be threaded to the threaded rod 7, a side of the push cover for squeezing the spring 4 comprises an annular groove, and a small end of the spring 4 is buckled in the annular groove. Four of the guide holes 52 are circumferentially disposed on an upper edge of the push cover at equal intervals, the guide holes 52 cooperate with the guide rods 6, and the push cover descends along the threaded rod 7 to compress the spring 4 under an action of the rotating member 8, thereby enabling the spring 4 to have a larger pre-compression force.

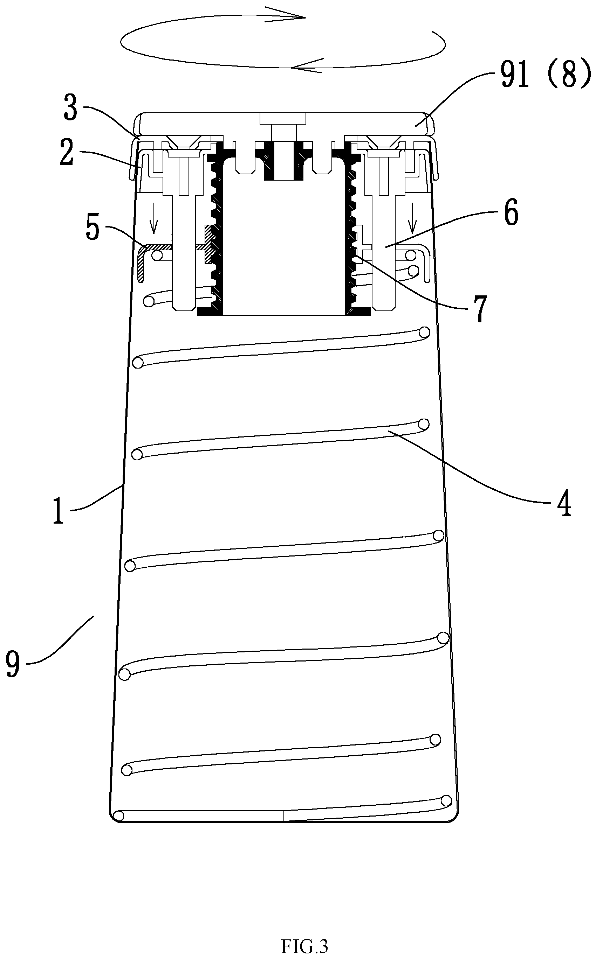

Embodiment 1 is shown in FIG. 3.

The spring package 9 is provided, the spring package 9 is a single-layer spring structure, and the single-layer spring structure is a structure in which a spring 4 is built into a wrapping member. The spring package 9 comprises a fabric bag 1, the spring 4, an outer pressure cover 3, an inner pressure cover 2, a threaded rod 7, guide rods 6, a spring push cover (a moving member 5), and a rotating top cover 91.

The spring 4 is mounted in the fabric bag 1, and the inner pressure cover 2 and the outer pressure cover 3 are closed to fix the fabric bag 1. The threaded rod 7, the guide rods 6, the spring push cover (the moving member 5), and the rotating top cover 91 define the adjustment member. The rotating top cover 91 is a rotating member 8, the rotating top cover 91 is connected to the threaded rod 7 by plugging, the threaded rod 7 passes through the outer pressure cover 3 and the inner pressure cover 2 to be rotatably disposed in the fabric bag 1, the guide rods 6 are fixed to the inner pressure cover 2, the spring push cover (the moving member 5) is threaded to the threaded rod 7, and a small end of the spring 4 is squeezed by the spring push cover (the moving member 5).

In a pre-compression adjustment, the rotating top cover 91 and the spring push cover (the moving member 5) are lowered along the threaded rod 7 to compress the spring 4, and the spring 4 is compressed to possess a larger pre-compression force, thus adjusting a softness-hardness level of the spring package 9.

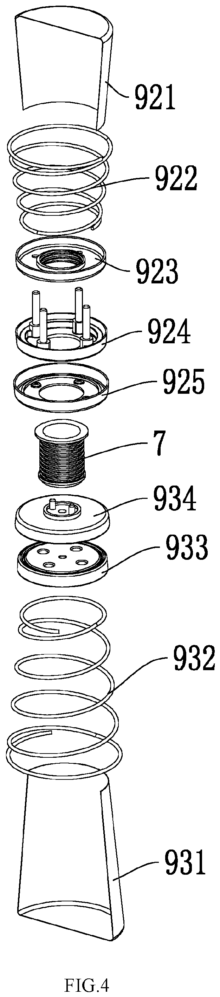

Embodiment 2 is shown in FIGS. 4-7.

The spring package 9 is provided, the spring package 9 is a double-layer spring structure, the double-layer spring structure comprises an upper spring structure 92 and a lower spring structure 93, and each of the upper spring structure 92 and the lower spring structure 93 comprises a structure in which a spring 4 (922 or 932) is built into a wrapping member.

The upper spring structure 92 comprises an upper fabric bag 921, an upper spring 922, an upper spring push cover 923, an upper pressure cover 924 of the upper fabric bag, and a lower pressure cover 925 of the upper fabric bag; and the lower spring structure 93 comprises a lower fabric bag 931, a lower spring 932, a lower pressure cover 933 of the lower fabric bag, and an upper pressure cover 934 of the lower fabric bag; and the adjustment member 94 comprises a threaded rod 7, guide rods 6 disposed on the upper pressure cover 924 of the upper fabric bag, the upper spring push cover 923 disposed in the upper spring structure 92, and a rotating member 8.

The upper fabric bag 921 is fixed by the upper pressure cover 924 of the upper fabric bag and the lower pressure cover 925 of the upper fabric bag, and the upper spring 922 is disposed in the upper fabric bag 921. The lower fabric bag 931 is fixed by the lower pressure cover 933 of the lower fabric bag and the upper pressure cover 934 of the lower fabric bag, and the lower spring 932 is disposed in the lower fabric bag 931. The threaded rod 7 is rotatably mounted in the upper fabric bag 921 and is connected to the lower pressure cover 925 of the upper fabric bag, pins 81 are disposed on the upper pressure cover 934 of the lower fabric bag, the threaded rod 7 comprises sockets, and the pins 81 are inserted into the sockets. The upper pressure cover 934 of the lower fabric bag is connected to the lower pressure cover 925 of the upper fabric bag, the upper pressure cover 934 of the lower fabric bag acts as the rotating member 8, and the upper spring structure 92 and the lower spring structure 93 are rotatable relative to each other.

In a pre-compression adjustment, the upper spring structure 92 or the lower spring structure 93 can rotate, however, when the spring package 9 is in use, the lower spring structure 93 serves as a support, the upper spring structure 92 serves as a stressed end, that is, the upper spring push cover 923 ascends along the threaded rod 7 to compress the spring 4 by rotating the upper spring structure 92, the spring 4 is compressed to possess a larger pre-compression force, thus adjusting a softness-hardness level of the spring package 9.

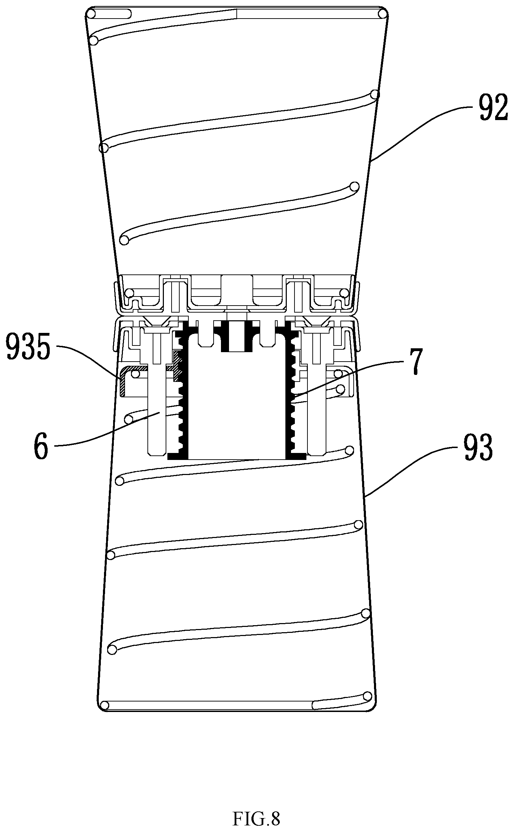

Embodiment 3 is shown in FIGS. 8-10.

Based on Embodiment 2, the structure differs from Embodiment 2 in that: the upper spring structure 92 comprises the upper fabric bag 921, the upper spring 922, the upper pressure cover 924 of the upper fabric bag, and the lower pressure cover 925 of the upper fabric bag; the lower spring structure 93 comprises the lower fabric bag 931, the lower spring 932, a lower spring push cover 935, the lower pressure cover 933 of the lower fabric bag, and the upper pressure cover 934 of the lower fabric bag; and the adjustment member 94 comprises the threaded rod 7, the guide rods 6 disposed on the lower pressure cover 933 of the lower fabric bag, the lower spring push cover 935 disposed in the lower spring structure 93, and the rotating member 8.

The threaded rod 7 is rotatably mounted in the lower fabric bag 931 and is connected to the upper pressure cover 934 of the lower fabric bag, the pins 81 are disposed on the lower pressure cover 925 of the upper fabric bag, the threaded rod 7 comprises the sockets, and the pins 81 are inserted into the sockets. The upper pressure cover 934 of the lower fabric bag is connected to the lower pressure cover 925 of the upper fabric bag, the lower pressure cover 925 of the upper fabric bag acts as the rotating member 8, and the upper spring structure 92 and the lower spring structure 93 are rotatable relative to each other.

In a pre-compression adjustment, the lower spring push cover 935 descends along the threaded rod 7 to compress the spring 4 by rotating the upper spring structure 92, and the spring 4 is compressed to possess a larger pre-compression force, thereby adjusting a softness-hardness level of the spring package 9.

The invention may be summarized as follows: The present disclosure discloses a spring structure with adjustable hardness, the spring structure comprises a spring, an adjustment member, and a wrapping member, the wrapping member is used for wrapping the spring, and the adjustment member is used for adjusting a pre-compression force of the spring; the adjustment member is disposed on one end of the spring to squeeze the one end of the spring; and the adjustment member comprises a rotating member, a moving member, and a support member, the moving member is movably mounted on the support member, and the rotating member is connected to the support member by a linkage; the rotating member rotates to drive the support member to rotate, and the moving member moves up and down along the support member to squeeze the spring by rotating the support member; and the spring structure solve problems of the existing spring structures, including inability to adjust a spring pre-compression force at will, inability to adjust a softness-hardness level when in use, and unitary function.

The aforementioned description is merely specific implement methods of the present disclosure, however, the design and the concept of the present disclosure are not limited thereto, all non-substantive modifications of the present disclosure fall within the protection scope of the present disclosure provided that they are made based on the concept within the technical scope disclosed by the present disclosure by any person familiar with skill in the art.

## Claims

1. A spring structure with adjustable hardness, **characterized in that**: the spring structure comprises a spring, an adjustment member, and a wrapping member, the wrapping member is used for wrapping the spring, and the adjustment member is used for adjusting a pre-compression force of the spring;
the adjustment member is disposed on one end of the spring to squeeze the one end of the spring; and the adjustment member comprises a rotating member, a moving member, and a support member, the moving member is movably mounted on the support member, and the rotating member is connected to the support member by a linkage; and
the rotating member rotates to drive the support member to rotate, and the moving member moves up and down along the support member to squeeze the spring by rotating the support member.

2. The spring structure with the adjustable hardness according to claim 1, **characterized in that**: the support member comprises a threaded rod, and the threaded rod is connected to the rotating member; and the moving member is threaded to the threaded rod.

3. The spring structure with the adjustable hardness according to claim 2, **characterized in that**: the support member comprises guide rods, and the moving member comprises an end surface for squeezing the spring; and
the guide rods are disposed on a side of the threaded rod, and the end surface of the moving member comprises guide holes, and the guide rods are disposed in the guide holes.

4. The spring structure with the adjustable hardness according to claim 3, **characterized in that**: four of the guide rods are disposed on a circumference of the threaded rod at equal intervals.

5. The spring structure with the adjustable hardness according to any one or more of claims 2 and 4, **characterized in that**: the rotating member is disposed on a top of the wrapping member; and pins are disposed on the rotating member, the threaded rod comprises sockets, and the pins are inserted into the sockets.

6. The spring structure with the adjustable hardness according to any one or more of claims 3 to 5, **characterized in that**: the wrapping member comprises a fabric bag, an inner pressure cover, and an outer pressure cover; the spring is wrapped in the fabric bag, and the inner pressure cover and the outer pressure cover are assembled in sequence to fix the spring in the fabric bag; and
the threaded rod passes through the outer pressure cover and the inner pressure cover to be disposed in the fabric bag, and the guide rods are fixed to an inner side of the inner pressure cover; and the rotating member is disposed on an upper side of the outer pressure cover.

7. The spring structure with the adjustable hardness according to any one or more of claims 1 to 6, **characterized in that**: the moving member is a push cover, a side of the push cover for squeezing the spring comprises an annular groove, and the one end of the spring is buckled in the annular groove.

8. The spring structure with the adjustable hardness according to any one or more of claims 2 to 7 **characterized in that**: a length of the threaded rod is at least 1/3 of an overall length of the spring structure.

9. A spring package, comprising the spring structure according to any one or more of claims 1-8, and the spring package is a single-layer spring structure; and the single-layer spring structure is a structure in which the spring is built into the wrapping member.

10. A spring package, **characterized in that**: the spring package is a double-layer spring structure, and the double-layer spring structure comprises an upper spring structure and a lower spring structure; and one spring structure of the upper spring structure and the lower spring structure is the spring structure according to any one or more of claims 1-8, the other spring structure serves as a rotating member of the one spring structure, and the upper spring structure and the lower spring structure are rotatable relative to each other.

11. A spring package, **characterized in that**: the spring package is a single-layer spring structure, and the single-layer spring structure is the spring structure with the adjustable hardness according to any one or more of claims 1-8.
